# EUROPEAN PATENT APPLICATION

(11) **EP 3 680 840 A1**
(43) Date of publication of application: **15.07.2020**
(21) Application number: 18881090.7
(22) Date of filing: 30.09.2018
(51) Int. Cl.: G06Q 10/10

(54) **CREDIT-BASED CLAIM SETTLEMENT IMPLEMENTING METHOD AND DEVICE**

(30) Priority: 22.11.2017 CN 201711172817
(71) Applicant: Alibaba Group Holding Limited, Grand Cayman (KY)
(72) Inventor: GUO, Yufeng, Zhejiang 311121 (CN); WANG, Bin, Zhejiang 311121 (CN); LIU, Yahui, Zhejiang 311121 (CN)
(74) Representative: Goddar, Heinz J.
(86) International application number: PCT/CN2018/108926
(87) International publication number: WO 2019/100854

(57) **Abstract**

A credit-based claim settlement implementing method, comprises receiving a claim settlement request sent by a user. After the claim settlement request sent by the user is received, the method further comprises: determining credit information of the user; when the credit information satisfies a credit constraint condition, prompting the user to upload claim settlement materials; verifying the claim settlement materials uploaded by the user; and if the claim settlement materials pass the verification, performing a claim settlement operation for the user based on the claim settlement materials.

## Description

### Technical Field

This disclosure relates to the field of Internet technology, and in particular, to a credit-based claim settlement implementing method and an apparatus thereof.

### Background

In recent years, with the improvement of human living standards, the insurance industry develops rapidly, bringing challenges to the claim settlement. At present, various claim settlement processes are quite cumbersome, which require the applicants to provide a large amount of materials, followed by a manual verification on those materials, such as verifying whether the material is falsified. The process leads to low claim settlement efficiency and poor claim settlement experiences.

### Summary

In view of the above, this description discloses a credit-based claim settlement implementing method and an apparatus/device thereof.

For example, this description is implemented by the following technical solutions.

A credit-based claim settlement implementing method, comprising:

after a claim settlement request sent by a user is received, determining credit information of the user;

when the credit information satisfies a credit constraint condition, prompting the user to upload claim settlement materials;

verifying the claim settlement materials uploaded by the user; and

if the claim settlement material passes the verification, performing a claim settlement operation for the user based on the claim settlement materials.

A credit-based claim settlement implementing apparatus, comprising:
a credit determining unit, configured to, after a claim settlement request sent by a user is received, determine credit information of the user;
a material uploading unit, configured to, when the credit information satisfies a credit constraint condition, prompt the user to upload claim settlement materials;
a material verification unit, configured to verify the claim settlement materials uploaded by the user; and
a claim settlement performing unit, configured to, if the claim settlement materials pass the verification, perform a claim settlement operation for the user based on the claim settlement material.

A credit-based claim settlement implementing device, comprising:
a processor; and
a memory for storing machine-executable instructions, wherein
by reading and executing the machine-executable instructions stored in the memory and corresponding to a credit-based claim settlement implementing method, the processor is configured to:
after a claim settlement request sent by a user is received, determine credit information of the user;
when the credit information satisfies a credit constraint condition, prompt the user to upload claim settlement materials;
verify the claim settlement materials uploaded by the user; and
if the claim settlement materials pass the verification, perform a claim settlement operation for the user based on the claim settlement materials.

It can be seen from the above description that, in this description, when credit information of a user satisfies a credit constraint condition, the user is allowed to submit a claim online and upload claim settlement materials. If the claim settlement materials uploaded by the user pass the verification, the claim settlement request submitted by the user can be processed. The entire process does not need human intervention. On one hand, claim settlement efficiency can be greatly enhanced, and claim settlement experience of the user can be improved. On the other hand, credit-based claim settlement and smart online verification of claim settlement materials can also effectively protect interests of insurance companies and effectively avoid financial losses caused by insurance fraud and other acts.

### Brief Description of the Drawings

FIG. 1 is a schematic flow chart of a credit-based claim settlement implementing method according to an exemplary embodiment of this description.
FIG. 2 is a schematic flow chart of a credit-based medical insurance claim settlement implementing method according to an exemplary embodiment of this description.
FIG. 3 is a schematic structural diagram of an apparatus for implementing credit-based claim settlement according to an exemplary embodiment of this description.
FIG. 4 is a block diagram of a credit-based claim settlement implementing apparatus according to an exemplary embodiment of this description.

### Detailed Description

Exemplary embodiments are described in detail here, examples of which are illustrated in the accompanying drawings. When the following description involves the accompanying drawings, the same numbers in different accompanying drawings represent the same or similar elements unless otherwise indicated. The implementation manners described in the following exemplary embodiments do not represent all implementation manners consistent with this description. Conversely, they are merely examples of apparatuses and methods consistent with some aspects of this description, as detailed in attached claims.

Terms used in this description are only aimed at describing specific embodiments rather than limiting this description. In this description and the attached claims, the singular forms "a", "an", and "the" are intended to include the plural forms as well, unless the context clearly indicates otherwise. It should also be understood that the term "and/or" used herein refers to and includes any or all possible combinations of one or more associated listed items.

It should be understood that although terms such as first, second, and third may be used in this description to describe various information, the information should not be limited to these terms. These terms are only used to distinguishing one piece of information from another piece of information of the same type. For example, without departing from the scope of this description, first information may alternatively be referred to as second information, and similarly, second information may also be referred to as first information. Depending on the context, the word "if" used herein can be interpreted as "at the time of' or "when" or "in response to determination".

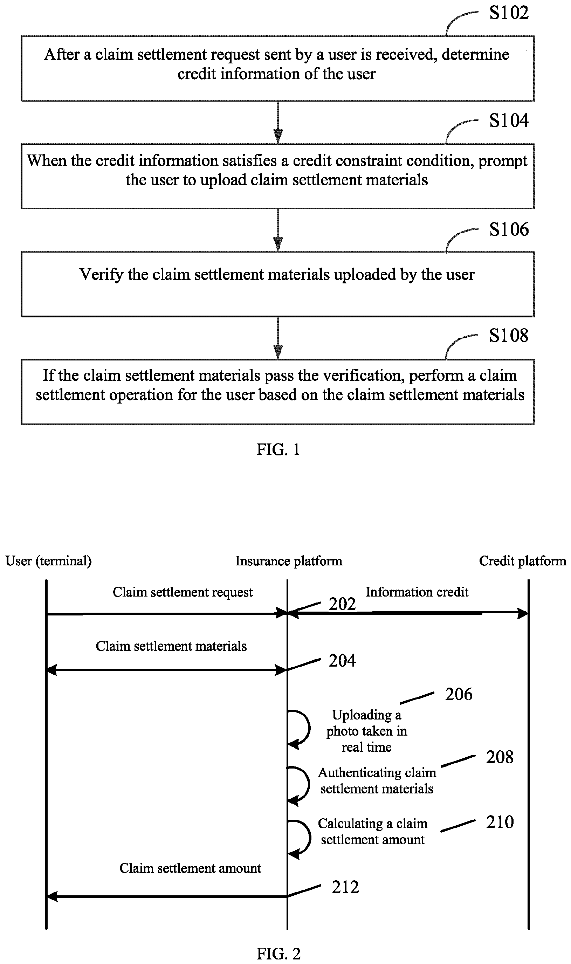

FIG. 1 is a schematic flow chart of a credit-based claim settlement implementing method according to an exemplary embodiment of this description.

Referring to FIG. 1, the credit-based claim settlement implementing method may comprise the following steps.

Step 102: after a claim settlement request sent by a user is received, determine credit information of the user.

In this embodiment, the claim settlement request may be a settlement request for a medical insurance claim, a settlement request for a mobile phone screen breakage insurance claim, a settlement request for a car insurance claim, or the like, which is not limited by this description.

Step 104: when the credit information satisfies a credit constraint condition, prompt the user to upload claim settlement materials.

In this embodiment, the claim settlement materials are uploaded by the user initiating the claim settlement request, and may include a photo of a payment invoice, a picture of an accident, or the like.

Step 106: verify the claim settlement materials uploaded by the user.

In this embodiment, whether the claim settlement materials are uploaded with uploading a photo taken in real time can be verified, and whether the claim settlement material is authentic, for example, whether a payment invoice is authentic or falsified, can be further verified.

Step 108: if the claim settlement materials pass the verification, perform a claim settlement operation for the user based on the claim settlement materials.

In this embodiment, if it is determined that the claim settlement materials pass the verification, a corresponding claim settlement amount can be calculated according to the claim settlement materials, and then a claim settlement operation can be performed.

It can be seen from the above description that in this embodiment, when the credit information of a user satisfies a credit constraint condition, the user is allowed to submit a claim online and upload claim settlement materials. When the claim settlement materials uploaded by the user pass the verification, the claim settlement request submitted by the user can be processed. The entire process does not need human intervention. On one hand, the claim settlement efficiency can be greatly enhanced, and the claim settlement experience of the user can be improved. On the other hand, the credit-based claim settlement and smart online verification of claim settlement materials can also effectively protect interests of insurance companies and effectively avoid financial losses caused by insurance fraud and other acts.

In this description, the credit-based claim settlement implementing method may be applicable to a credit platform deployed by a credit service provider, wherein the credit platform has a payment function, or can call other platforms with a payment function to implement payment operations.

The credit-based claim settlement implementing method may also be applicable on an insurance platform deployed by an insurance company, wherein the insurance platform has a user credit assessment function or can call other third-party credit assessment functions to obtain the credit information of a user.

The credit-based claim settlement implementing method may also be implemented through cooperation between a credit platform and an insurance platform. For example, the credit platform provides a credit assessment function, and the insurance platform provides functions of verifying the claim settlement materials and performing a claim settlement operation, which are not limited by this description.

Here, physical carriers of the above-described credit platform and insurance platform are servers or server clusters deployed by associated service providers.

The implementation process of this description is described below using a settlement request for a medical insurance claim as an example.

Referring to FIG. 2, the credit-based medical insurance claim settlement implementing method provided in this embodiment may comprise the following steps.

Step 202: after an insurance platform receives a claim settlement request sent by a user, the insurance platform obtains credit information of the user from a credit platform.

In this embodiment, the user initiating the claim settlement request through the insurance platform is used as an example for description. When initiating the claim settlement request, the user can select a claim settlement type, such as a settlement of a medical insurance claim.

Certainly, if the user submits a claim for other insurance, the user may select other claim settlement types accordingly, such as a settlement of a car insurance claim or of a freight insurance claim, which is not limited by this description.

In this embodiment, after receiving the above-described claim settlement request, the insurance platform can determine an identity of the user based on login information of the user, such as ID card number and name. The user does not need to re-enter identity information.

In this embodiment, with regard to a claim settlement type having a relatively high claim settlement amount, after the claim settlement request is received, identity authentication may be performed on the user first. For example, the user is required to take a photo of his/her face to determine whether such an operation is performed by the user. Certainly, the identity authentication may be alternatively performed using other manners, such as a mobile phone number verification or an address verification, which may be referred to verification solutions provided in related technologies, and will not be elaborated by this embodiment herein.

The above-described claim settlement types requiring identity authentication may be set up in advance. For example, for a claim settlement type having a relatively high amount of money, such as settlement of a medical insurance claim or a car insurance claim, an identity authentication step may be set up. For a claim settlement type having a low amount of money, such as settlement of a freight insurance claim, an identity authentication step may be omitted. The credit information of the user can be obtained directly after the claim settlement request is received, which is not limited by this description.

In this embodiment, the insurance platform may obtain the credit information of the user from a credit platform through a calling interface provided by the credit platform.

In an example, a display form of the credit information may be a credit score. Based on the credit score, a credit rating of the user, such as credit-eligible or credit-ineligible, can be directly determined. Here, "credit-eligible" usually indicates that the user has relatively good credit and a relatively low insurance fraud probability. "Credit-ineligible", on the other hand, usually indicates that the user has relatively poor credit and a relatively high insurance fraud probability.

In another example, a display form of the credit information may be a credit score and a credit rating, wherein the credit rating may include credit-eligible and credit-ineligible. Based on the credit rating, a credit rating of the user can be determined directly. Based on the credit score, users with the same credit rating can be further distinguished from others.

In this embodiment, the credit information may be determined by the credit platform after the credit platform receives a call from the insurance platform. Alternatively, the credit information may be predetermined and stored by the credit platform. When the insurance platform calls for the credit information, the stored credit information is returned to the insurance platform.

In this embodiment, the credit platform may determine the credit information of the user according to information such as asset information, claim settlement frequencies, or a credit history of the user. For example, the information such as asset information, claim settlement frequencies, and the credit history of the user can be converted into numerical values, and then a credit score of the user can be determined through weighted averaging or the like.

Certainly, the credit score of the user may be alternatively determined by other manners, which are not limited by this embodiment.

Step 204: when the credit information satisfies a credit constraint condition, the insurance platform prompts the user to upload claim settlement materials.

Based on the above-described step 202, after obtaining the credit information of the user, the insurance platform may determine whether the credit information meets a credit constraint condition, for example, determining whether the credit score of the user is greater than a score threshold.

Here, the credit constraint condition may be preset by staff of the insurance platform. For different claim settlement types, corresponding credit constraint conditions can be the same or different.

In this embodiment, the process of determining whether the credit information satisfies a credit constraint condition may be alternatively implemented by a credit system. For example, a credit constraint condition may be preconfigured in the credit system. The credit system performs the determination after obtaining the credit information of the user and returns a determination result to the insurance platform, which is not limited by this embodiment.

In this embodiment, if the credit information of the user satisfies a credit constraint condition, the insurance platform may prompt the user to upload claim settlement materials. For example, the insurance platform may send to the client software used by the user a message for uploading the claim settlement materials. When the user confirms the message, the client software can call a camera for image acquisition. The processing and implementation of this step may be referred to related technologies, and will not be elaborated in this embodiment herein.

In this embodiment, claim settlement materials corresponding to different claim settlement types are usually different.

Claim settlement materials corresponding to a settlement of a medical insurance claim may include a payment invoice, medical record evidences, and the like. Claim settlement materials for a settlement of a car insurance claim may include photos of damages, a repair invoice, and the like. Claim settlement materials for a settlement of a mobile phone screen breakage insurance claim may include a photo of a mobile phone with a broken screen. The claim settlement materials can be regulated by the insurance platform and are uploaded by the user according to the regulation.

Step 206: the insurance platform detects, by using a living body detection technology, whether uploading the claim settlement materials is performed by uploading photos taken in real time.

In this embodiment, in order to prevent the user from falsifying the claim settlement materials using an image processing technology to gain compensation money illegally or the like, the insurance platform may detect, by using a living body detection technology, whether uploading the claim settlement materials is performed by uploading photos taken in real time.

For example, after a camera is called, the user is prompted to shake the claim settlement material and the like, to prove that the claim settlement material is indeed in the hands of the user.

Here, the above-described living body detection process may be implemented by the insurance platform or a client connected to the insurance platform, which is not limited by this embodiment.

In this embodiment, if it is determined that uploading the claim settlement material is performed by uploading a photo taken in real time, proceed to step 206.

If it is determined that uploading the claim settlement material is not performed by uploading a photo taken in real time, a prompt message may be output to the user to prompt the user to upload the claim settlement material again.

Step 208: if uploading the claim settlement material is performed by uploading a photo taken in real time, the insurance platform identifies authenticity of the claim settlement material.

Based on a result of the determination in the above-described step 206, when uploading the claim settlement material is performed by uploading a photo taken in real time, it can be determined that the claim settlement material is indeed in the hands of the user, and is not a picture that the user uses to gain compensation money illegally.

In this embodiment, authenticity of the claim settlement materials can be further identified.

Taking the claim settlement material being a payment invoice as an example, an AI (Artificial Intelligence) technology may be used to identify the invoice information of the payment invoice, such as an invoice number, an invoice header, and the name of the payer.

Based on the identified information, the insurance platform can call an interface provided by a tax system to identify the authenticity of the payment invoice.

If the payment invoice is determined to be authentic, it can be determined that the payment invoice passes the verification, and step 210 may be performed.

If the payment invoice is determined to be falsified, it can be determined that the payment invoice does not pass the verification. The user is suspected of insurance fraud, and the credit platform can be notified to negatively update the credit information of the user.

In another example, if the claim settlement material is a piece of medical record evidence, an AI technology may be used to identify whether the medical record evidence has a corresponding doctor's signature, hospital seal, etc. Identification can be made according to the requirements of the real medical record evidence.

Certainly, in this embodiment, in addition to the AI technology, other technologies may also be used to identify the authenticity of the claim settlement material, which is not limited by this embodiment.

Step 210: if the claim settlement material passes the verification, the insurance platform calculates a claim settlement amount corresponding to the claim settlement material.

Based on a result of the identification in the above-described step 208, if it is determined that the claim settlement material passes the verification, it can be determined that the claim settlement request is a real settlement request and no insurance fraud is involved.

In this embodiment, the claim settlement amount corresponding to the claim settlement material can be calculated. For example, an OCR (Optical Character Recognition) technology may be used to identify a payment amount in a payment invoice, and a corresponding claim settlement amount is calculated.

For a settlement of a medical insurance claim, categories (A, B, or C) and corresponding amounts of various expenses in a payment invoice can be identified based on the OCR technology. Then a corresponding claim settlement amount is calculated based on the type of the medical insurance insured by the user.

Certainly, in other examples, if the claim settlement type is a settlement of a mobile phone screen breakage insurance claim, a screen breakage degree can also be identified based on an image processing technology. Then a corresponding claim settlement amount is calculated, which will not be elaborated in this embodiment herein.

Step 212: when the claim settlement amount does not exceed a self-service claim settlement limit amount, the insurance platform performs a claim settlement operation for the user based on the claim settlement amount.

Based on the above-described step 210, after calculating the claim settlement amount, the insurance platform can determine whether the claim settlement amount exceeds a self-service claim settlement limit amount. Here, the self-service claim settlement limit amount is usually set by an insurance company according to the claim settlement type.

When the claim settlement amount does not exceed the self-service claim settlement limit amount, the user can be compensated directly. For example, the fund in the claim settlement amount is transferred to an account bound with the user.

When the claim settlement amount exceeds the self-service claim settlement limit amount, in order to protect the interests of the insurance company, the claim settlement request may be forwarded for manually processing, so that the staff of the insurance company may perform a further verification.

Certainly, the above-described self-service claim settlement limit amount may not be set up, which is not limited by this embodiment.

In this embodiment, the insurance platform may further return a result of the claim settlement to the credit platform after processing the claim settlement request of the user, and the credit platform updates the credit information of the user accordingly.

For example, if the claim of the user is settled successfully, the credit platform may positively update the credit information of the user.

For another example, if the user is suspected of insurance fraud, the credit platform may negatively update the credit information of the user, and the user may be prohibited to submit an online claim afterwards.

It can be seen from the above description that this embodiment can implement online claim settlement, which provides ease of operation and a high claim settlement efficiency to the user. For an insurance company, credit-based claim settlement and smart online verification of claim settlement materials can effectively protect the interests of the insurance company and effectively avoid financial losses caused by insurance fraud and other acts. At the same time, a large amount of labor costs is saved.

It should be noted that the information interaction among the user, the insurance platform, and the credit platform described in this description is a general information interaction among a terminal device used by the user or client software installed on the terminal device, the insurance platform, and the credit platform.

In accordance with the above-described embodiments of the credit-based claim settlement implementing method, this description further provides embodiments of a credit-based claim settlement implementing apparatus.

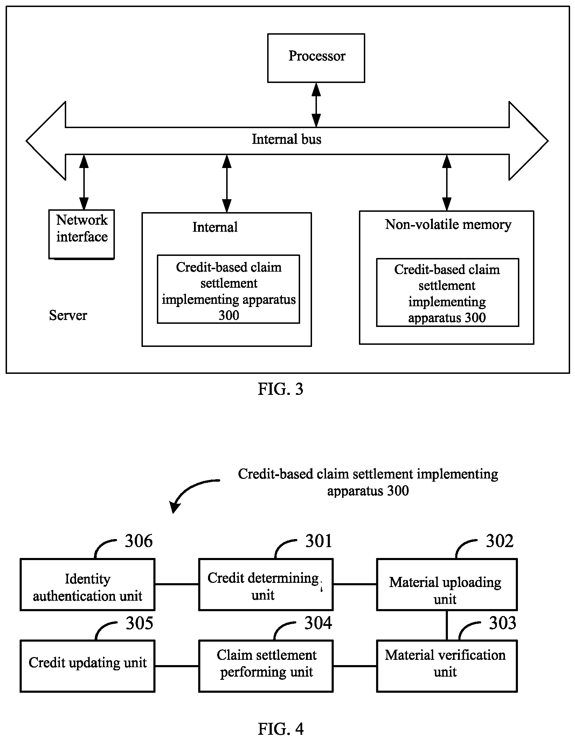

The embodiments of the credit-based claim settlement implementing apparatus in this description may be applicable onto a server. The apparatus embodiments may be achieved by software, hardware, or a combination of software and hardware. Using software to achieve the embodiment as an example, the apparatus in a logical sense is formed by reading, by a processor of the server in which the apparatus is located, a corresponding computer program instruction in a non-volatile memory into an internal storage for execution. In terms of hardware, FIG. 3 is a hardware structural diagram of a server in which the credit-based claim settlement implementing apparatus according to this description is located. In addition to the processor, the internal storage, the network interface, and the non-volatile memory shown in FIG. 3, usually the server in which the apparatus of this embodiment is located may further include other hardware according to actual functions of the server, which will not be elaborated herein.

FIG. 4 is a block diagram of a credit-based claim settlement implementing apparatus according to an exemplary embodiment of this description.

Referring to FIG. 4, the credit-based claim settlement implementing apparatus 300 may be applicable onto the above-described server shown in FIG. 3, and comprises a credit determining unit 301, a material uploading unit 302, a material verification unit 303, a claim settlement performing unit 304, a credit updating unit 305, and an identity authentication unit 306.

Wherein, the credit determining unit 301 is configured to, after a claim settlement request sent by a user is received, determine credit information of the user;

the material uploading unit 302 is configured to, when the credit information satisfies a credit constraint condition, prompt the user to upload claim settlement materials;

the material verification unit 303 is configured to verify the claim settlement materials uploaded by the user; and

the claim settlement performing unit 304 is configured to, if the claim settlement materials pass the verification, perform a claim settlement operation for the user on the basis of the claim settlement materials.

Optionally, the material verification unit 303 is configured to:
detect, by using a living body detection technology, whether uploading the claim settlement materials is performed by uploading photos taken in real time;
if uploading the claim settlement materials is performed by uploading photos taken in real time, identify authenticity of the claim settlement materials; and
if the claim settlement materials are authentic, determine that the claim settlement materials pass the verification.

Optionally, when the claim settlement material is a payment invoice, the material verification unit 303 is configured to:
identify invoice information of the payment invoice by using an AI technology; and
identify authenticity of the payment invoice according to the invoice information.

Optionally, the claim settlement performing unit 304 is configured to:
calculate a claim settlement amount corresponding to the claim settlement materials; and
when the claim settlement amount does not exceed a self-service claim settlement amount limit, perform a claim settlement operation for the user based on the claim settlement amount.

The credit updating unit 305 is configured to negatively update the credit information of the user if the claim settlement materials do not pass the verification.

The identity authentication unit 306 is configured to perform identity authentication on the user after the claim settlement request sent by the user is received. If the user passes the identity authentication, notify the credit determining unit to perform the step of determining credit information of the user.

Optionally, the credit determining unit 301 is configured to determine the credit information of the user according to asset information, claim settlement frequencies, or a credit history of the user.

For details about the implementation process of functions and effects of each unit in the above-described apparatus, see the implementation process of the corresponding steps in the above-described method, which will not be elaborated herein.

The apparatus embodiments basically correspond to the method embodiments, related portions of the apparatus embodiments may be referred to the corresponding descriptions in the method embodiments. The above-described apparatus embodiments are only examples. Units described as separate components may or may not be physically separated, and components displayed as units may or may not be physical units; that is, they may be located at one place or be distributed on multiple network units. Some or all of the modules may be selected according to actual needs to achieve the objectives of the solutions in this description. Those skilled in the art can understand and implement the solutions without creative efforts.

Systems, apparatuses, modules, or units described in the above-described embodiments may be implemented by computer chips or physical objects, or by products with certain functions. A typical implementation device is a computer, and a specific form of the computer may be a personal computer, a laptop computer, a cellular phone, a camera phone, a smart phone, a personal digital assistant, a media player, a navigation device, an email sending and receiving device, a game console, a tablet computer, a wearable device, or a combination of any of these devices.

In accordance with the above-described embodiments of the credit-based claim settlement implementing method, this description further provides a credit-based claim settlement implementing apparatus. The credit-based claim settlement implementing apparatus comprises a processor and a memory for storing machine-executable instructions. Here, the processor and the memory are usually connected to each other through an internal bus. In other possible implementation manners, the apparatus may further include an external interface to enable communications with other devices or components.

In this embodiment, through reading and executing machine-executable instructions which are stored in the memory and correspond to a credit-based claim settlement implementing logic, the processor is enabled to:
after a claim settlement request sent by a user is received, determine credit information of the user;
when the credit information satisfies a credit constraint condition, prompt the user to upload claim settlement materials;
verify the claim settlement materials uploaded by the user; and
if the claim settlement materials pass the verification, perform a claim settlement operation for the user based on the claim settlement materials.

Optionally, the step of verifying the claim settlement materials uploaded by the user comprises:
detecting, by using a living body detection technology, whether uploading the claim settlement materials is performed by uploading photos taken in real time;
if the uploading of the claim settlement materials is performed by uploading photos taken in real time, determining whether the claim settlement materials are authentic; and
if the claim settlement materials are authentic, determining that the claim settlement materials pass the verification.

Optionally, when the claim settlement material is a payment invoice, the step of identifying authenticity of the claim settlement materials comprises:
identifying invoice information of the payment invoice by using an AI technology; and
identifying authenticity of the payment invoice according to the invoice information.

Optionally, the step of performing a claim settlement operation for the user based on the claim settlement materials comprises:
calculating a claim settlement amount corresponding to the claim settlement materials; and
when the claim settlement amount does not exceed a self-service claim settlement amount limit, performing a claim settlement operation for the user based on the claim settlement amount.

Optionally, the following step is further comprised:
negatively updating the credit information of the user if the claim settlement materials do not pass the verification.

Optionally, after a claim settlement request sent by a user is received, the following steps are further comprised:
performing identity authentication on the user; and
performing the step of determining the credit information of the user if the user passes the identity authentication.

Optionally, the step of determining the credit information of the user comprises:
determining the credit information of the user according to asset information, claim settlement frequencies, or a credit history of the user.

In accordance with the above-described embodiments of the credit-based claim settlement implementing method, this description further provides a computer-readable storage medium. The computer-readable storage medium stores a computer program, which is executed by a processor to perform the following steps:
a credit-based claim settlement implementing method, comprising:
after a claim settlement request sent by a user is received, determining credit information of the user;
when the credit information satisfies a credit constraint condition, prompting the user to upload claim settlement materials;
verifying the claim settlement materials uploaded by the user; and
if the claim settlement materials pass the verification, performing a claim settlement operation for the user based on the claim settlement materials.

Optionally, the step of verifying the claim settlement materials uploaded by the user comprises:
detecting, by using a living body detection technology, whether uploading the claim settlement materials is performed by uploading photos taken in real time;
if uploading the claim settlement materials is performed by uploading photos taken in real time, identifying authenticity of the claim settlement materials; and
if the claim settlement materials are authentic, determining that the claim settlement materials pass the verification.

Optionally, when the claim settlement material is a payment invoice, the step of identifying authenticity of the claim settlement material comprises:
identifying invoice information of the payment invoice by using an AI technology; and
identifying authenticity of the payment invoice according to the invoice information.

Optionally, the step of performing a claim settlement operation for the user based on the claim settlement materials comprises:
calculating a claim settlement amount corresponding to the claim settlement materials; and
when the claim settlement amount does not exceed a self-service claim settlement limit amount, performing a claim settlement operation for the user based on the claim settlement amount.

Optionally, the following step is further performed:
negatively updating the credit information of the user if the claim settlement materials do not pass the verification.

Optionally, after a claim settlement request sent by a user is received, the following steps are further performed:
performing identity authentication on the user; and
performing the step of determining credit information of the user if the user passes the identity authentication.

Optionally, the step of determining the credit information of the user comprises:
determining the credit information of the user according to asset information, claim settlement frequencies, or a credit history of the user.

The specific embodiments of this description are described above. Other embodiments are within the scope of the attached claims. In some cases, actions or steps in the claims may be performed in a sequence different from that in the embodiments and the desired result can still be achieved. In addition, the desired result can still be achieved if the processes described in the accompanying drawings are not necessarily performed in the illustrated particular or continuous sequence. In some implementation manners, multitasking and parallel processing are also feasible or may be advantageous.

The above embodiments are only preferred embodiments of this description and are not intended to limit this description. Any modification, equivalent replacement, or improvement made within the spirit and principles of this description shall fall within the protection scope of this description.

## Claims

1. A credit-based claim settlement implementing method, comprising:
after a claim settlement request sent by a user is received, determining credit information of the user;
when the credit information satisfies a credit constraint condition, prompting the user to upload claim settlement materials;
verifying the claim settlement materials uploaded by the user; and
if the claim settlement materials pass the verification, performing a claim settlement operation for the user based on the claim settlement materials.

2. The method according to claim 1, wherein the verifying the claim settlement materials uploaded by the user comprises:
detecting, using a living body detection technology, whether uploading the claim settlement materials is performed with uploading a photograph taken in real time;
in response to detecting that uploading the claim settlement materials is performed with uploading a photograph taken in real time, determining whether the claim settlement materials are authentic; and
if the claim settlement materials are authentic, determining that the claim settlement materials pass the verification.

3. The method according to claim 2, wherein when the claim settlement materials include a payment invoice, the determining whether the claim settlement materials are authentic comprises:
identifying invoice information of the payment invoice using an artificial intelligence technology; and
determining whether the payment invoice is authentic according to the invoice information.

4. The method according to claim 1, wherein the performing a claim settlement operation for the user based on the claim settlement materials comprises:
calculating a claim settlement amount corresponding to the claim settlement materials; and
when the claim settlement amount does not exceed a self-service claim settlement limit, performing the claim settlement operation for the user based on the claim settlement amount.

5. The method according to claim 1, further comprising:
negatively updating the credit information of the user if the claim settlement materials do not pass the verification.

6. The method according to claim 1, wherein after the claim settlement request sent by the user is received, the method further comprises:
authenticating an identity of the user; and
in response to the identity of the user being authenticated, determining the credit information of the user.

7. The method according to claim 1, wherein the determining credit information of the user comprises:
determining the credit information of the user according to asset information, claim settlement frequencies, or a credit history of the user.

8. A credit-based claim settlement implementing apparatus, comprising:
a credit determining unit, configured to, after a claim settlement request sent by a user is received, determine credit information of the user;
a material uploading unit, configured to, when the credit information satisfies a credit constraint condition, prompt the user to upload claim settlement materials;
a material verification unit, configured to verify the claim settlement materials uploaded by the user; and
a claim settlement performing unit, configured to, if the claim settlement materials pass the verification, perform a claim settlement operation for the user based on the claim settlement materials.

9. The apparatus according to claim 8, wherein the material verification unit is further configured to:
detect, using a living body detection technology, whether uploading the claim settlement materials is performed with uploading a photograph taken in real time;
in response to detecting that uploading the claim settlement materials is performed with uploading a photograph taken in real time, determine whether the claim settlement materials are authentic; and
if the claim settlement materials are authentic, determine that the claim settlement materials pass the verification.

10. The apparatus according to claim 9, wherein when the claim settlement materials include a payment invoice, the material verification unit is further configured to:
identify invoice information of the payment invoice by using an artificial intelligence technology; and
determine whether the payment invoice is authentic according to the invoice information.

11. The apparatus according to claim 8, wherein the claim settlement performing unit is configured to:
calculate a claim settlement amount corresponding to the claim settlement material; and
when the claim settlement amount does not exceed a self-service claim settlement limit, perform the claim settlement operation for the user based on the claim settlement amount.

12. The apparatus according to claim 8, further comprising:
a credit updating unit, configured to negatively update the credit information of the user if the claim settlement materials do not pass the verification.

13. The apparatus according to claim 8, further comprising:
an identity authentication unit, configured to
authenticate an identity of the user after the claim settlement request sent by the user is received, and
in response to the identity of the user being authenticated, notify the credit determining unit to determine the credit information of the user.

14. The apparatus according to claim 8, wherein
the credit determining unit is further configured to determine the credit information of the user according to asset information, claim settlement frequencies, or a credit history of the user.

15. A credit-based claim settlement implementing device, comprising:
a processor; and
a memory for storing machine-executable instructions, wherein
by reading and executing the machine-executable instructions stored in the memory and corresponding to a credit-based claim settlement implementing method, the processor is configured to:
after a claim settlement request sent by a user is received, determine credit information of the user;
when the credit information satisfies a credit constraint condition, prompt the user to upload claim settlement materials;
verify the claim settlement materials uploaded by the user; and
if the claim settlement materials pass the verification, perform a claim settlement operation for the user based on the claim settlement materials.
